# EUROPÄISCHE PATENTSCHRIFT

(11) **EP 1 034 892 B1**
(45) Veröffentlichungstag und Bekanntmachung des Hinweises auf die Patenterteilung: **04.09.2002**
(21) Anmeldenummer: 00104682.0
(22) Anmeldetag: 03.03.2000
(51) Int. Cl.: B24D 7/18, B24B 49/12, B24B 3/36, A01F 29/22

(54) **Schleifvorrichtung**
Grinding apparatus
Dispositif de meulage

(30) Priorität: 11.03.1999 DE 19910758
(43) Veröffentlichungstag der Anmeldung: 13.09.2000
(73) Patentinhaber: DEERE & COMPANY, Moline, Illinois 61265-8098 (US)
(72) Erfinder: Clauss, Steffen, Dr., 66503 Dellfeld (DE)
(74) Vertreter: Holst, Sönke, Dr.

(56) Entgegenhaltungen:
- EP-A- 0 302 565
- DE-A- 3 535 473
- US-A- 3 490 179
- US-A- 3 964 211

## Beschreibung

Die Erfindung betrifft eine Schleifvorrichtung mit einem Schleifstein zum Schleifen eines Messers und einer Nachweiseinrichtung, mit der das Erreichen eines Verschleißpunktes des Schleifsteins nachweisbar ist, wobei die Nachweiseinrichtung ein in den Schleifstein eingebettetes, elektrisch leitendes Element umfaßt, das beim Erreichen des Verschleißpunktes zerstört wird oder frei liegt, und die Nachweiseinrichtung den Zustand des Elements erfaßt.

An Ernte- und Erntegutaufbereitungsmaschinen, wie zum Beispiel einem Feldhäcksler, werden Messer zur Zerkleinerung von pflanzlichen oder anderen Materialien verwendet. Diese Messer nutzen sich durch den Gebrauch ab und müssen geschliffen werden. Im Stand der Technik sind verschiedene manuelle und automatische Schleifmechanismen bekannt.

Bei den bekannten Schleifmechanismen finden Schleifsteine der verschiedensten Formen und Materialien Verwendung. Der Schleifstein ist in der Regel an einer Schleifsteinhalterung befestigt und wird beim Schleifen über die Breite der Messer verfahren und sukzessive den Messern zugestellt. Neben den geschärften Messern nützt sich auch der Schleifstein beim Schleifen ab. Es ist daher möglich, daß die Schleifsteinhalterung bei vollständig abgenutztem Schleifstein in Kontakt mit den zu schleifenden Messern kommt und diese beschädigt.

In der US 3 964 211 A wird eine Honmaschine beschrieben, bei der die Dicke eines Schleifmediums durch einen Hebel abgefühlt wird, der mit einem Schalter verbunden ist. Unterschreitet das Schleifmedium eine bestimmte Dicke, wird der Schalter betätigt und ein entsprechendes Signal abgegeben. Als nachteilig ist anzusehen, daß der hier vorgeschlagene Mechanismus sehr exakt arbeiten muss, um keine falschen Signale abzugeben.

Die EP 0 302 565 A offenbart eine andere Honmaschine, bei der zwischen einem Träger und einem Schneid- oder Schleifbelag eine Indikatorschicht angeordnet ist, die einen mit fluoreszierendem Farbstoff beschichteten Kupferdraht umfasst. Sobald der Schneid- oder Schleifbelag seinen Verschleißpunkt erreicht hat, wird die nunmehr freiliegende Indikatorschicht optisch nachgewiesen und ein entsprechendes Signal abgegeben. Nachteilig ist der hohe Aufwand zum Nachweis der Indikatorschicht.

Die DE 35 35 473 A offenbart ein Drehwerkzeug, bei dem eine Schneidplatte aus mehreren Schichten besteht. Unter einer elektrisch nichtleitenden Schneidkeramik folgt eine Schicht aus leitendem Material. Ist die Schneidkeramik verschlissen, entsteht ein Kontakt zwischen der leitenden Schicht und dem Werkstück, der zum Steuern von Schaltvorgängen ausgenutzt wird. Dabei ist als nachteilig anzusehen, dass aufgrund der Bewegung des Werkstücks nicht immer ein sicherer Kontakt zwischen dem drehenden Werkstück und der leitenden Schicht entsteht.

Das der Erfindung zugrunde liegende Problem wird in den genannten Nachteilen des Standes der Technik gesehen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Kerngedanke besteht darin, eine mögliche Beschädigung der Messer durch die Schleifvorrichtung dadurch zu verhindern, daß ein abgenutzter Schleifstein erkannt wird und rechtzeitig durch einen neuen ausgetauscht werden kann. Dazu ist eine entsprechende Nachweiseinrichtung vorgesehen, die beim Erreichen des Verschleißpunktes des Schleifsteins ein entsprechendes Signal abgibt. Es ist daher vorgeschlagen, in den Schleifstein ein Element einzubetten, das beim Erreichen des Verschleißpunktes zerstört wird oder frei liegt. Die Nachweiseinrichtung erfaßt dann den Zustand dieses Elements. Als in den Schleifstein integriertes Element wird ein elektrisch leitendes Element - wie beispielsweise ein Draht - verwendet, das in Schleifenform im Schleifstein verlegt ist.

Voraussetzung dafür ist, daß der Schleifstein als solcher ein Nichtleiter ist, was aber in der Regel der Fall ist. Wird die Schleife bei Erreichen des Verschleißpunktes durch den Schleifvorgang zerstört, ist die elektrische Verbindung zwischen den zwei Enden des elektrisch leitenden Elements unterbrochen, so daß die Nachweiseinrichtung auf einfache Weise erfassen kann, ob der Verschleißpunkt des Schleifsteins erreicht ist.

Dieses Signal kann zum Ansteuern einer Anzeigeeinheit dienen, die einen Benutzer informiert, falls der Schleifstein nach Erreichen des Verschleißpunktes auszutauschen ist. Alternativ oder zusätzlich kann die Nachweiseinrichtung auch die Schleifvorrichtung derart steuern, daß ein Schleifen nur mit einem Schleifstein möglich ist, der seinen Verschleißpunkt noch nicht erreicht hat. Es wäre auch denkbar, die Anzeigeeinheit mit einer anderen Information zu beaufschlagen, die den Benutzer schon kurz vor Erreichen des Verschleißpunktes darüber informiert, daß der Schleifstein bald auszutauschen ist. Das kann über eine entsprechende Nachweiseinrichtung erfolgen, die einen zweiten Abnutzungszustand des Schleifsteins detektiert, der kurz vor dem Verschleißpunkt liegt.

Das in den Schleifstein eingebettete elektrisch leitende Element ist elektrisch mit einer Nachweisschaltung zu verbinden, die ihrerseits die Anzeigeeinheit steuert und/oder das Schleifen ermöglicht oder unterbindet. Dazu bestehen im Rahmen der Erfindung verschiedene Möglichkeiten: Zum einen kann die Verbindung permanent vorhanden sein; bei einem über die Breite einer Messertrommel verschiebbaren Schleifstein also beispielsweise mittels eines flexiblen Kabels oder eines Schleifkontakts an der Schleifsteinhalterung, der an einem mit der Nachweisschaltung verbundenen und entlang der Bewegungsbahn des Schleifsteins angeordneten Draht oder dergleichen anliegt. Um dieses Kabel einzusparen, kann zum anderen der Schleifstein in eine Meßposition verfahren werden, in der das elektrisch leitende Element mit der Nachweisschaltung temporär elektrisch des Schleifsteins angeordneten Draht oder dergleichen anliegt. Um dieses Kabel einzusparen, kann zum anderen der Schleifstein in eine Meßposition verfahren werden, in der das elektrisch leitende Element mit der Nachweisschaltung temporär elektrisch verbunden ist. Die Meßposition ist insbesondere die Parkposition des Schleifsteins, also seine Außerbetriebsstellung. Findet ein elektrisch leitendes Element Verwendung, dessen Ende beim Erreichen des Verschleißpunktes frei liegt, kann das entsprechende Prüfelement, das mit diesem Ende in Berührung kommt, auch an der Parkposition angeordnet werden. Als Nachweisschaltung kommt insbesondere ein Mikroprozessor in Frage, der Bestandteil der Steuerung einer Schleif- und/oder Schneideinrichtung sein kann.

Zusätzlich zu einem in den Schleifstein eingebetteten elektrisch leitenden Element ist die Verwendung eines optischen Sensors vorgeschlagen, dessen Ausgangssignal sich ändert, sobald der Verschleißpunkt des Schleifsteins erreicht ist. Dazu kann beispielsweise ein Hohlraum im Schleifstein vorgesehen sein, in den beim Erreichen des Verschleißpunktes Umgebungslicht hineinfällt, das durch den optischen Sensor detektiert wird. Auch ein optischer Sensor kann dauerhaft (insbesondere über ein flexibles Kabel) oder temporär (nur in einer Meßposition, z. B. Parkposition) mit einer Nachweisschaltung verbunden werden.

Die vorliegende Erfindung ist an einer Vielzahl von Einrichtungen mit zu schärfenden Messern verwendbar. Sie kann insbesondere an selbstfahrenden oder gezogenen Erntemaschinen mit Häckseltrommeln benutzt werden.

In den Zeichnungen sind zwei nachfolgend näher beschriebene Ausführungsbeispiele der Erfindung dargestellt. Es zeigt:
- Fig. 1: eine Erntemaschine mit einer Häckseltrommel mit Schleifvorrichtung in Seitenansicht und in schematischer Darstellung,
- Fig. 2: eine Seitenansicht einer Schleifvorrichtung in den während des Schleifens eingenommenen Endpositionen,
- Fig. 3: einen unbenutzten Schleifstein nach einer ersten Ausführungsform der Erfindung ,
- Fig. 4: den Schleifstein der Figur 3 in abgenutztem Zustand,
- Fig. 5: einen unbenutzten Schleifstein nach einer zweiten Ausführungsform der Erfindung,
- Fig. 6: den Schleifstein der Figur 5 in abgenutztem Zustand,
- Fig. 7: einen unbenutzten Schleifstein nach einer dritten Ausführungsform der Erfindung,
- Fig. 8: den Schleifstein der Figur 7 in abgenutztem Zustand,
- Fig. 9: einen unbenutzten Schleifstein nach einer vierten Ausführungsform der Erfindung,
- Fig. 10: den Schleifstein der Figur 9 in abgenutztem Zustand,
- Fig. 11: einen Schleifstein mit angeschlossener Nachweisschaltung,
- Fig. 12: einen Schleifstein mit einer anderen Nachweisschaltung,
- Fig. 13: eine dritte Ausführungsform einer Nachweisschaltung, und
- Fig. 14: eine vierte Ausführungsform einer Nachweisschaltung.

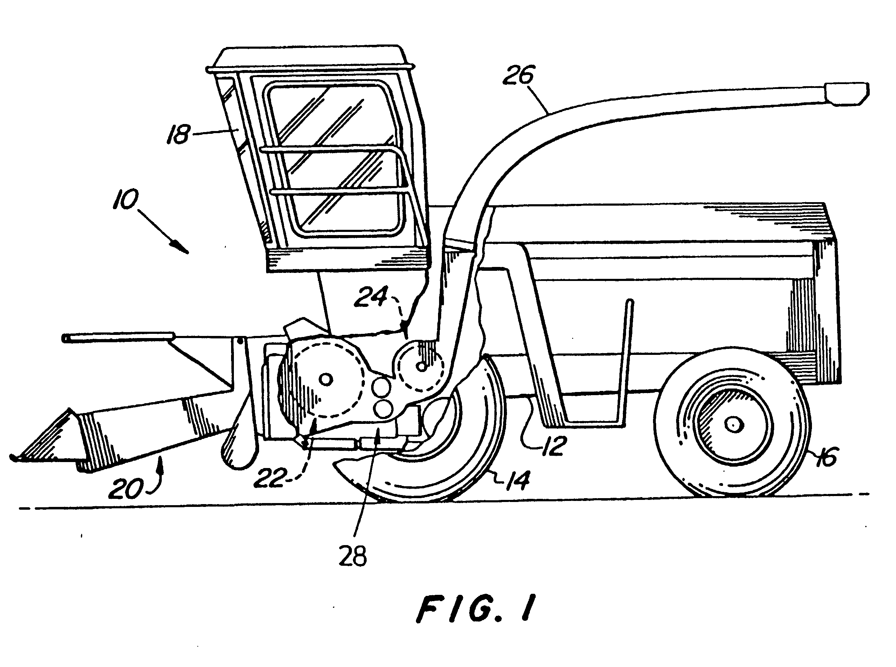

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verläßt die Erntemaschine 10 zu einem nebenher fahrenden Anhänger über einen drehbaren Austragsschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird. Weitere Einzelheiten der Erntemaschine 10 bedürfen keiner Beschreibung, weil diese an sich bekannt ist. Die Lage der Nachzerkleinerungsvorrichtung 28 ist jedoch nicht entscheidend, so daß sie auch stromabwärts der Fördervorrichtung 24 vorgesehen werden kann.

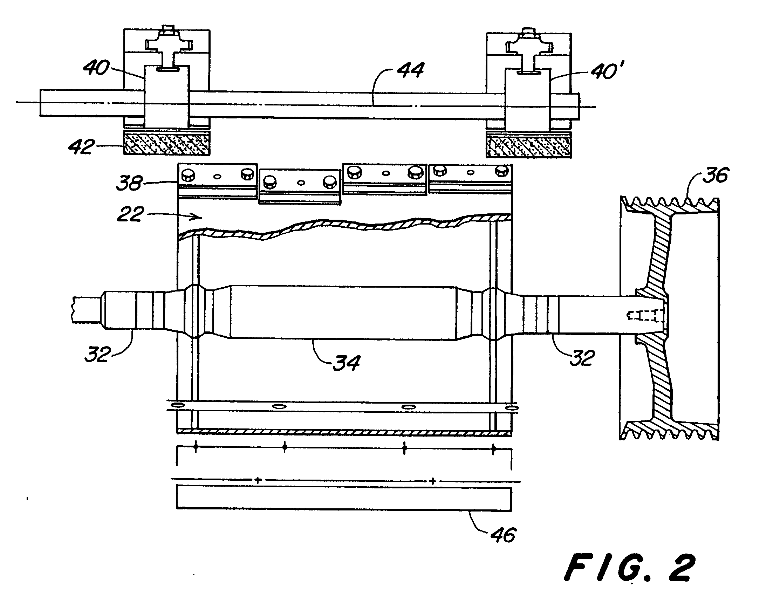

In Figur 2 ist schematisch eine Ansicht einer Häckseltrommel 22 und einer ihr zugeordneten Schleifvorrichtung wiedergegeben, wie sie sich bei einer Betrachtung der Erntemaschine 10 in Figur 1 (bezüglich der Bewegungsrichtung) von vorn ergibt. Die Häckseltrommel 22 weist ein Anzahl über ihre Breite und ihren Umfang verteilter Messer 38 auf, die in Zusammenwirken mit einem starren Gegenmesser 46 durch die Erntegutaufnahmeeinrichtung 20 aufgenommenes Erntegut zerteilt. Die Häckseltrommel 22 umfaßt eine zentrale Welle 32, die über eine Stirnseite der Riemenscheibe 36 und nicht dargestellte Riemen durch einen Motor der Erntemaschine 10 rotativ antreibbar ist. Die Welle 34 stützt sich durch zwei beidseits der Häckseltrommel 22 angeordnete Lager am Rahmen 12 der Erntemaschine 10 ab. Bei der Häckseltrommel 22 ist einerseits der Abstand vom Gegenmesser 46, andererseits die Schärfe der Messer 38 kritisch. Ist der Abstand vom Gegenmesser 46 zu gering, werden die Messer 38 schnell stumpf oder gar beschädigt, ist er zu groß, wird das eingebrachte Erntegut nicht richtig zerkleinert. Die vorliegende Erfindung bezieht sich auf die zweitgenannte Problematik, die Schärfe der Messer 38. Um nach einer bestimmten Betriebsdauer die Messer 38 schärfen zu können, ohne die einzelnen Messer 38 oder die gesamte Häckseltrommel 22 ausbauen zu müssen, ist oberhalb der Häckseltrommel 22 nahe des von den Messern 38 beschriebenen Hüllkreises eine Schleifvorrichtung vorgesehen, die im wesentlichen einen Schleifstein 42, eine diesem zugeordnete Schleifsteinhalterung 40 und eine Achse 44 umfaßt, auf der die Schleifsteinhalterung 40 verschiebbar gelagert ist.

Sollen die Messer 38 geschärft werden, wird die Häckseltrommel 22 in Rotation versetzt, in der Regel in umgekehrter Drehrichtung und/oder mit reduzierter Drehzahl, verglichen mit normalem Häckselbetrieb. Die Schleifsteinhalterung 40 mit dem daran befestigtem Schleifstein 42 wird aus einer (nicht eingezeichneten) Ruhe- oder Parkposition, in der sie seitlich neben der Häckseltrommel 22 angeordnet ist, über die gesamte Breite der Häckseltrommel 22 verschoben. Dabei ist die Unterseite des Schleifsteins 42 in Kontakt mit den Messern 38, und schärft sie. Ein Schleifvorgang läuft derart ab, daß der Schleifstein 42 mehrere Male über die Breite der Häckseltrommel 22 verfahren wird. Die Endpunkte dieser Verschiebebewegung sind in der Figur 2 durch die Schleifsteinhalterungen mit den Bezugsziffern 40 am linken Umkehrpunkt und 40' am rechten Umkehrpunkt dargestellt. Zwischen den Verschiebebewegungen erfolgt ein Zustellen des Schleifsteins 42, also eine geringfügige Bewegung des Schleifsteins 42 auf die Messer 38 zu. Das Zustellen als solches ist an sich bekannt; es kann durch Verschieben des Schleifsteins oder der ganzen Halterung erfolgen.

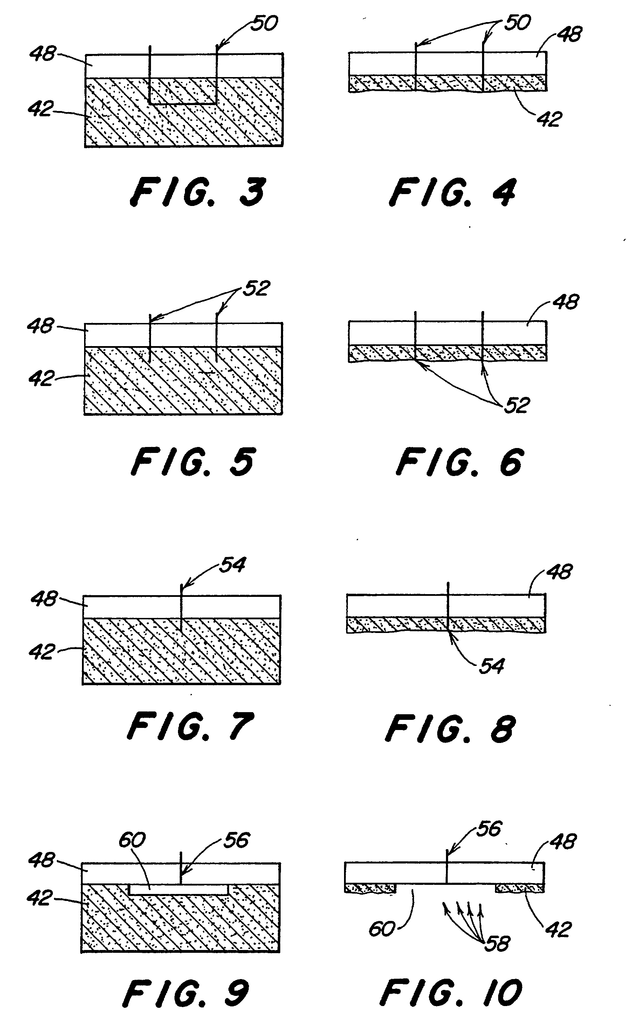

Um zu verhindern, daß die Messer 38 bei abgenutztem Schleifstein 42 in Kontakt mit der Schleifsteinhalterung 40 kommen, werden erfindungsgemäß Sensoren eingesetzt, die zum Nachweis eines abgenutztem Schleifsteins 42 dienen. In Figur 3 ist ein unbenutzter (fabrikneuer) Schleifstein 42 dargestellt, durch den eine Drahtschleife 50 als elektrisch leitendes Element verlegt ist. Die Drahtschleife 50 kann bei der Herstellung des Schleifsteins 42, die z. B. durch Sintern oder Pressen von Schleifmaterial und einer adhäsiven Füllmasse erfolgt, im Schleifstein 42 eingebettet werden. Eine Platte 48 der Schleifsteinhalterung 40, an der der Schleifstein 42 in der Regel durch eine Klebeverbindung befestigt ist, ist zumindest in dem Bereich, durch den die Enden der Drahtschleife 50 hindurchgeführt sind, nichtleitend. Die Platte 48 kann in diesem Bereich eine hinreichend große Bohrung aufweisen oder insgesamt elektrisch isolierend sein. Die Platte 48 ist vorzugsweise gemeinsam mit dem Schleifstein 42 an der (in Figur 2 gezeigten) übrigen Schleifsteinhalterung 40 lösbar befestigt, um beide Teile (Schleifstein 42 und Platte 48) im Bedarfsfall gemeinsam austauschen zu können. Dazu kann insbesondere eine Verschraubung dienen.

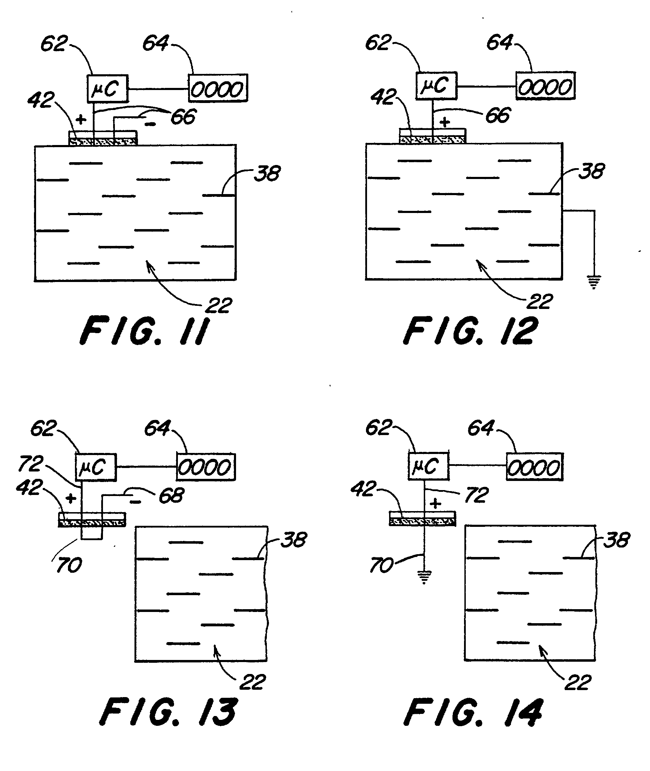

Wie in den Figuren 11 und 13 dargestellt ist, kann die elektrische Leitfähigkeit der Drahtschleife 50 gemessen werden. In Figur 3 ist der Schleifstein 42 neu, und die Drahtschleife 50 ist intakt; somit besteht ein elektrischer Kontakt zwischen ihren Enden. In Figur 4 ist derselbe Schleifstein 42 in abgenutztem Zustand dargestellt. Mit dem Schleifmaterial ist auch die Drahtschleife 50 abgeschliffen worden, und es besteht kein elektrischer Kontakt mehr zwischen ihren Enden. Durch Messung der Leitfähigkeit (oder des Widerstandes) der Drahtschleife 50 kann das Erreichen des Verschleißpunktes des Schleifsteins 42 angezeigt werden.

In Figur 5 ist eine zweite Ausführungsform eines erfindungsgemäßen Schleifsteins 42 dargestellt. In den Schleifstein 42 sind zwei Drähte 52 als elektrisch leitende Elemente integriert, die sich in die Richtung erstrecken, in der der Schleifstein 42 den Messern 38 zugeführt wird. Wenn der Schleifstein 42 abgenutzt ist, wie in Figur 6 dargestellt, liegen die den Messern 38 zugewandten Enden der Drähte 52 frei, und können in Kontakt mit den Messern 38 (oder einer anderen leitenden Fläche) kommen. Durch die Integration der Drähte 52 in den Schleifstein 42 und Messung des Widerstands oder Leitwerts zwischen den Drähten 52 ist somit ebenfalls eine Anzeige des Verschleißpunktes des Schleifsteins 42 möglich.

In Figur 7 ist eine dritte Ausführungsform eines erfindungsgemäßen Schleifsteins dargestellt. In dieser Ausführungsform ist nur ein einziger Draht 54 als elektrisch leitendes Element in den Schleifstein 42 integriert. Wenn der Schleifstein 42 seinen Verschleißpunkt erreicht hat, wie in Figur 8 dargestellt, liegt das den Messern 38 zugewandte, unten eingezeichnete Ende des Drahts 54 frei, und kann bei rotierender Messertrommel in Kontakt mit den Messern 38 kommen. Durch Messung des Widerstands zwischen der Häckseltrommel 22, die in der Regel auf einem Massepotential liegt, und dem oberen Ende des Drahts 54 ist der Verschleißpunkt des Schleifsteins nachweisbar; in diesem Fall wird der Widerstand bei bestimmten Winkelstellungen der Häckseltrommel 22, in denen der Draht 54 Kontakt mit einem Messer 38 hat, wesentlich kleiner als zuvor. Es ist auch möglich, die Schleifsteinhalterung 40 seitlich neben die Häckseltrommel 22 zu verbringen, und die Unterseite des Schleifsteins 42 in Kontakt mit einem anderen leitenden Prüfelement zu bringen und den entsprechenden Widerstand zu messen.

In Figur 9 ist ein Schleifstein nach einer vierten Ausführungsform der Erfindung dargestellt. An der den Messern 38 abgewandten Oberseite des Schleifsteins 42 ist ein Hohlraum 60 vorgesehen, in dem ein optischer Sensor 56 angeordnet ist. Wenn der Schleifstein 42 seinen Verschleißpunkt erreicht hat, ist das den Hohlraum 60 abdeckende Material des Schleifsteins 42 abgeschliffen, so daß der Hohlraum 60 - und somit der optische Sensor 56 - eintreffendem Licht 58 ausgesetzt ist. Auf diese Weise kann der Verschleißpunkt unproblematisch nachgewiesen werden.

In Figur 11 ist eine erste Ausführungsform einer Nachweisschaltung dargestellt, die in Verbindung mit Schleifsteinen 42 nach den Figuren 3 bis 6 verwendbar ist. Die Schleifsteinhalterung 40 mit dem daran befestigten Schleifstein 42 ist mit flexiblen Kabeln 66 versehen, die einen Endes an den Drähten 50 bzw. 52, die in den Schleifstein 42 integriert sind, angeschlossen sind. Eines der Kabel 66 ist anderen Endes auf ein bestimmtes Potential gelegt (in der Zeichnung Fahrzeugmasse), und das andere Kabel an einen Mikroprozessor 62 angeschlossen, der seinerseits eine Anzeigeeinrichtung 64 steuert. Der Mikroprozessor 62 ist stationär; er-wird also nicht über die Breite der Häckseltrommel 22 verschoben. Anstelle des Mikroprozessors 62 wäre auch ein Relais oder dergleichen verwendbar. Anhand des Potentials am Kabel 66 wird der Mikroprozessor 62 mit einer Information beaufschlagt, die darauf hinweist, ob der Schleifstein 42 seinen Verschleißpunkt erreicht hat (dann liegt das Kabel auf 0 V) oder nicht (dann liegt das Kabel auf einem beliebigem anderen Potential). In dieser Ausführungsform erfolgt die Überwachung des Schleifsteins 42 kontinuierlich. Bei einem Schleifstein 42, wie er in Figur 3 dargestellt ist, vergrößert sich der Widerstand bei abgenutztem Schleifstein durch Unterbrechung der Drahtschleife 50. Hingegen verringert sich der Widerstand bei einem in Figur 5 dargestellten Schleifstein 42 beim Erreichen des Verschleißpunktes, da dann die Messer 38 (bei entsprechender Winkelstellung) einen Kontakt zwischen den Drähten 52 erzeugen, während der Widerstand zuvor höher war.

In Figur 12 ist eine zweite Ausführungsform einer Nachweisschaltung dargestellt, die in Verbindung mit dem in den Figuren 7 und 8 gezeigten Schleifstein 62 verwendbar ist. Der in den Schleifstein 42 integrierte Draht 54 ist über ein einzelnes flexibles Kabel 66 an einen stationären Mikroprozessor 62 angeschlossen, der eine Anzeigeeinrichtung 64 steuert. Ist der Schleifstein 42 abgenutzt, entsteht bei entsprechender Stellung der Messer 38 der mit der Fahrzeugmasse verbundenen Häckseltrommel 22 gelegentlich (bei entsprechender Stellung eines Messers 38) Kontakt zwischen Draht 54 (und somit dem Kabel 66) und der Fahrzeugmasse. Der Mikroprozessor 62 (der auch durch eine einfachere Schaltung, wie ein Relais oder ein Flipflop ersetzbar wäre) erkennt diesen Kontakt, und steuert die Anzeigeeinheit 64 entsprechend. Auch in dieser Ausführungsform erfolgt die Detektion des Zustands des Schleifsteins 42 kontinuierlich.

Figur 13 zeigt eine dritte Ausführungsform einer Nachweisschaltung, die mit Schleifsteinen 42 der Figuren 5 und 6 verwendbar ist. Der Schleifstein 42 ist (z.B. nach-Beendigung eines Schleifvorgangs) seitlich neben die Häckseltrommel 22 verfahren worden. Die Enden der Drähte 52 an der Unterseite des Schleifsteins 42 sind in Kontakt mit einem Prüfelement in Form einer Drahtschleife 70, und die oberseitigen Kontakte der Drähte 52 sind über ein Kabel 68 auf ein bestimmtes Potential gelegt, bzw. über ein weiteres Kabel 72 an einen Mikroprozessor 62 angeschlossen, der eine Anzeigeeinheit 64 steuert. Die Drahtschleife 70 und die Kabel 68 und 72 sind stationär. Wenn der Schleifstein 42 seinen Verschleißpunkt erreicht hat, kommt die Drahtschleife 70 in Kontakt mit den Drähten 52 im Schleifstein 42, so daß sich das Potential am Eingang des Mikroprozessors 62 ändert. Ist der Schleifstein 42 noch hinreichend wenig abgenutzt, kommt kein Kontakt zwischen Drahtschleife 70 und Drähten 52 im Schleifstein 42 zustande. Die in Figur 13 dargestellte Nachweiselektronik wäre auch in Verbindung mit dem Schleifstein 42 aus Figur 3 verwendbar, wobei die Drahtschleife 70 entfallen würde.

Schließlich ist in Figur 14 eine vierte Ausführungsform einer Nachweisschaltung dargestellt, die in Kombination mit dem in Figur 7 und 8 gezeigten Schleifstein 42 verwendbar ist. Die Kontakte der Nachweisschaltung sind ebenfalls stationär neben der Häckseltrommel 22 angeordnet. Zur Prüfung des Schleifsteins 42 muß dieser somit nach einem Schleifvorgang neben die Häckseltrommel 22 (in seine Parkposition) verbracht werden. Ein als Prüfelement dienender Kontakt 70 ist auf Massepotential, und ein zweiter Kontakt 72 ist mit einem Mikroprozessor 62 verbunden, der eine Anzeigeeinheit 64 steuert. Ist der Schleifstein 42 noch hinreichend wenig abgenutzt, kommt kein elektrischer Kontakt zwischen dem Draht 54 im Schleifstein 42 und dem Kontakt 70 zustande. Hat der Schleifstein 42 hingegen seinen Verschleißpunkt erreicht, tritt der (sich auf Massepotential befindliche) Kontakt 70 in elektrische Verbindung mit dem Draht 54, so daß auch der Kontakt 72 auf Massepotential ist, und der Mikroprozessor 62 mit einem entsprechenden Signal beaufschlagt wird. Letzterer steuert dann die Anzeigeeinheit 64, und warnt einen Benutzer bei abgenutztem Schleifstein 42.

Im Ergebnis bildet der in den Schleifstein 42 eingebettete Draht 50, 52, 54 gemeinsam mit den Kabeln bzw. Kontakten 66, 68, 70, 72, dem Mikroprozessor 62 und der Anzeigeeinheit 64 eine Nachweiseinrichtung, mit der das Erreichen des Verschleißpunktes des Schleifsteins 42 nachweisbar ist.

## Patentansprüche

1. Schleifvorrichtung, mit einem Schleifstein (42) zum Schleifen eines Messers (38) und einer Nachweiseinrichtung, mit der das Erreichen eines Verschleißpunktes des Schleifsteins (42) nachweisbar ist, wobei die Nachweiseinrichtung ein in den Schleifstein (42) eingebettetes, elektrisch leitendes Element umfaßt, das beim Erreichen des Verschleißpunktes zerstört wird oder frei liegt, und die Nachweiseinrichtung den Zustand des Elements erfaßt, **dadurch gekennzeichnet, dass** das elektrisch leitende Element eine Schleife im Schleifstein (42) bildet, die beim Erreichen des Verschleißpunktes durchtrennt wird.

2. Schleifvorrichtung nach Anspruch 1, **dadurch gekennzeichnet, daß** die Nachweiseinrichtung eine Anzeigeeinheit (64) steuert und/oder das Schleifen des Messers (38) ermöglicht bzw. unterbindet.

3. Schleifvorrichtung nach Anspruch 1 oder 2, **dadurch gekennzeichnet, daß** das im Schleifstein (42) angeordnete Element ein Draht (50, 52, 54) ist.

4. Schleifvorrichtung nach einem der Ansprüche 1 bis 3, **dadurch gekennzeichnet, daß** das elektrisch leitende Element dauerhaft mit einer Nachweisschaltung, insbesondere einem Mikroprozessor (62), verbunden ist, die die Anzeigeeinheit (64) steuert und/oder das Schleifen des Messers (38) ermöglicht bzw. unterbindet.

5. Schleifvorrichtung nach Anspruch 4, **dadurch gekennzeichnet, daß** der Schleifstein (42) über die Breite der Messer (38) verfahrbar ist, und daß das elektrisch leitende Element über ein flexibles Kabel (66) mit der Nachweisschaltung verbunden ist.

6. Schleifvorrichtung nach einem der Ansprüche 1 bis 3, **dadurch gekennzeichnet, daß** der Schleifstein (42) zur Überprüfung, ob der Verschleißpunkt erreicht ist, in eine Meßposition, insbesondere eine Außerbetriebsstellung, verbracht wird, in der das elektrisch leitende Element mit einer Nachweisschaltung, beispielsweise einem Mikroprozessor (62), lösbar elektrisch verbunden ist, die die Anzeigeeinheit (64) steuert und/oder das Schleifen des Messers (38) ermöglicht bzw. unterbindet.

7. Schleifvorrichtung nach Anspruch 6, **dadurch gekennzeichnet, daß** ein Prüfelement (70), mit dem ein beim Erreichen des Verschleißpunktes frei gewordenes Ende des elektrisch leitenden Elements im Schleifstein (42) in Kontakt kommt, an der Meßposition angeordnet ist.

8. Schleifvorrichtung nach einem der Ansprüche 1 oder 2, **dadurch gekennzeichnet, daß** die Nachweiseinrichtung einen optischen Sensor (56) umfaßt.

9. Schleifvorrichtung nach Anspruch 8, **dadurch gekennzeichnet, daß** der optische Sensor (56) an einem Hohlraum (60) des Schleifsteins (42) angeordnet ist, der beim Erreichen des Verschleißpunktes des Schleifsteins (42) gegenüber einfallendem Licht (58) geöffnet wird.

10. Schleifvorrichtung nach Anspruch 8 oder 9, **dadurch gekennzeichnet, daß** der optische Sensor dauerhaft oder lösbar mit einer Nachweisschaltung, insbesondere einem Mikroprozessor (62), verbunden ist, die die Anzeigeeinheit (64) steuert und/oder das Schleifen des Messers (38) ermöglicht bzw. unterbindet.

11. Erntemaschine, insbesondere selbstfahrender oder gezogener Feldhäcksler, mit einer Häckseltrommel (22) und einer Schleifvorrichtung nach einem der Ansprüche 1 bis 10.

## Claims

1. Grinding apparatus with a grindstone (42) for grinding a blade (38) and a detector device, with which attainment of a wear point of the grindstone (42) can be indicated, wherein the detector device comprises an electrically conductive element which is embedded in the grindstone (42) and is destroyed or exposed on attaining the wear point and the detector device detects the state of the element, **characterized in that** the electrically conductive element forms a loop in the grindstone (42) which is severed on attainment of the wear point.

2. Grinding apparatus according to claim 1, **characterized in that** the detector device controls a display unit (64) and/or allows or prevents the grinding of the blade (38).

3. Grinding apparatus according to claim 1 or 2, **characterized in that** the element disposed in the grindstone (42) is a wire (50, 52, 54).

4. Grinding apparatus according to any of claims 1 to 3, **characterized in that** the electrically conductive element is permanently connected to an detector circuit, especially a microprocessor (62), which controls the display unit (64) and/or allows or prevents the grinding of the blade (38).

5. Grinding apparatus according to claim 4, **characterized in that** the grindstone (42) can be traversed over the width of the blade (38) and **in that** the electrically conductive element is connected to the detector circuit by a flexible cable (66).

6. Grinding apparatus according to any of claims 1 to 3, **characterized in that** the grindstone (42) is brought into a measuring position, especially an out of operation position, for checking whether the wear point has been reached, in which position the electrically conductive element is separably electrically connected to a detector circuit, for example a microprocessor (62), which controls the display unit (64) and/or allows or prevents the grinding of the blade (38).

7. Grinding apparatus according to claim 6, **characterized in that** a test element (70) is arranged at the measuring position, with which element an end of the electrically conductive element in the grindstone (42) becoming exposed on reaching the wear point comes into contact,

8. Grinding apparatus according to claim 1 or 2, **characterized in that** the detector device comprises an optical sensor (56).

9. Grinding apparatus according to claim 8, **characterized in that** the optical sensor (56) is arranged at a hollow space (60) of the grindstone (42) which is exposed to incident light (58) on attaining the wear point of the grindstone (42).

10. Grinding apparatus according to claim 8 or 9, **characterized in that** the optical sensor is connected permanently or separably to a detector circuit, especially a microprocessor (62), which controls the display unit (64) and/or allows or prevents the grinding of the blade (38).

11. A harvesting machine, especially a self-propelled or towed forage harvester, with a chopper drum (22) and a grinding apparatus according to any of claims 1 to 10.

## Revendications

1. Dispositif d'affûtage comportant une meule (42) pour aiguiser un couteau (38) et un dispositif de détection, au moyen duquel il est possible de détecter que le point d'usure de la meule (42) est atteint, dans lequel le dispositif de détection comprend un élément électriquement conducteur, qui est inséré dans la meule (42) et qui, lorsque le point d'usure est atteint, est détruit ou est mis à nu, et le dispositif de détection détecte l'état de l'élément, **caractérisé en ce que** l'élément électriquement conducteur forme dans la meule (42) une boucle qui est sectionnée lorsque le point d'usure est atteint.

2. Dispositif d'affûtage selon la revendication 1, **caractérisé en ce que** le dispositif détection commande une unité d'affichage (64) et/ou permet l'affûtage du couteau et/ou permet ou interrompt l'affûtage du couteau (38).

3. Dispositif d'affûtage selon la revendication 1 ou 2, **caractérisé en ce que** l'élément disposé dans la meule (42) est un fil (50, 52, 54).

4. Dispositif d'affûtage selon une des revendications 1 à 3, **caractérisé en ce que** l'élément électriquement conducteur est relié de façon permanente à un circuit de détection, notamment un microprocesseur (72), qui commande l'unité d'affichage (64) et/ou permet ou arrêt l'affûtage du couteau (38).

5. Dispositif d'affûtage selon la revendication 4, **caractérisé en ce que** la meule (42) est déplaçable sur la largeur des couteaux (38) et que l'élément électriquement conducteur est relié par un câble flexible (66) au circuit de détection.

6. Dispositif d'affûtage selon l'une des revendications 1 à 3, **caractérisé en ce que** pour vérifier si le point d'usure est atteint, la meule (42), la meule (42) est amenée dans une position de mesure, notamment une position hors service, dans laquelle l'élément électriquement conducteur est relié électriquement de façon amovible à un circuit de détection, par exemple un microprocesseur (62), qui commande l'unité d'affichage (64) et/ou permet ou arrête l'affûtage du couteau (38).

7. Dispositif d'affûtage selon la revendication 6, **caractérisé en ce qu'**un élément de contrôle (70), avec lequel vient en contact une extrémité de l'élément électriquement conducteur, qui a été mise à nu lorsque le point d'usure est atteint, pour la meule (42) est disposé dans la position de mesure.

8. Dispositif d'affûtage selon l'une des revendications 1 ou 2, **caractérisé en ce que** le dispositif de détection comprend un capteur optique (56).

9. Dispositif d'affûtage selon la revendication 8, **caractérisé en ce que** le capteur optique (56) est disposé dans une cavité (60) de la meule (42), qui, lorsque le point d'usure de la meule (42) est atteint, est ouverte pour une lumière incidente (58).

10. Dispositif d'affûtage selon la revendication 8 ou 9, **caractérisé en ce que** le capteur optique est relié de façon permanente ou de façon amovible à un circuit de détection, notamment à un microprocesseur (62), qui commande l'unité d'affichage (64) et/ou permet ou arrête l'affûtage du couteau (38).

11. Moissonneuse, notamment ramasseuse-hacheuse autopropulsée ou tractée, comportant un tambour hacheur (22) et un dispositif d'affûtage selon l'une des revendications 1 à 10.
